# EUROPEAN PATENT SPECIFICATION

(11) **EP 0 473 682 B1**
(45) Date of publication and mention of the grant of the patent: **13.07.1994**
(21) Application number: 90908720.7
(22) Date of filing: 15.05.1990
(51) Int. Cl.: G01C 15/06, G01D 5/04

(54) **LEVELLING BAR**
NIVELLIERVORRICHTUNG
BARRE DE NIVELLEMENT

(30) Priority: 22.05.1989 SE 8901824
(43) Date of publication of application: 11.03.1992
(73) Proprietor: MARTINSSON, Jonas, S-441 91 Alingsas (SE)
(72) Inventor: MARTINSSON, Jonas, S-441 91 Alingsas (SE)
(74) Representative: Roth, Ernst Adolf Michael
(86) International application number: SE9000321
(87) International publication number: WO9014576

(56) References cited:
- DE-B- 2 031 968
- US-A- 1 611 062
- US-A- 4 718 171

## Description

The present invention concerns a levelling bar, in the form of a simple bar or several telescopically into each other displaceable bars, to determine the elevation difference between different points and which is provided with a displaceable slide which can be locked in different positions, on which is arranged a level indicator. US-A-4 718 171 discloses a stadia rod for use in a levelling system.

### Background of the invention

Differences in elevation between different points are determined by means of a levelling instrument, by which is provided an optically horizontal line of sight, from which is measured the distance to the ground by means of a levelling bar. Until now this has consisted of a wooden bar normally foldable to lengths easy to handle and said bar is provided with a painted scale on one side, with e.g. 1 cm as the smallest unit.

At index point levelling the elevation is determined for a number of marked points, whereby one starts from an index point with known or assumed elevation. When determining elevations of a larger area, a number of moving points are often also required, this involves a large number of calculations to be carried out, in order to obtain the required elevations.

### Object of the invention and the most essential features

The object of the invention is to provide a levelling bar, which considerably simplifies the calculation of the elevations, especially when the elevation variations are large. This problem has been solved by providing the slide with a counter, which in cooperation with the bar/bars or a reference means fixed to said bar/bars is arranged to indicate the relative distance from one of the outer ends of the bar/bars to said level indicator.

### Description of the drawings

The invention will be described below in a number of embodiments with reference to the appended drawings.

Fig. 1 shows a lateral view of a first embodiment of the levelling bar according to the invention.

Fig. 2 a section along the line II-II in fig. 1.

Fig. 3 shows a longitudinal section through a second embodiment of the levelling bar according to the invention.

Fig. 4 is a section along the line IV - IV in fig. 3.

Fig. 5 shows a longitudinal section through a third embodiment of the levelling bar according to the invention.

Fig. 6 shows a longitudinal section through a fourth embodiment of the levelling bar according to the invention.

Fig. 7 is a section along the line VII-VII in fig. 6.

### Description of embodiments

In its simplest design the levelling bar contains of a profile bar with mainly U-shaped cross section. On the inside of the profile bar in the mid section 19 of the U between the shanks is provided a reference means 12 which in the embodiment shown is constituted by a rack 13. Along the profile bar 11 a displacable slide 14 is provided, which by means of a clamping screw 15 is lockable in different displacement positions. In the slide 14 a level indicator 16 is provided which contains a window 17 provided with an index mark (not shown) and on the outside of the mid section 19 of the profile bar a scale (not shown) is provided, the division of which can be brought into relation with the index mark.

In the slide 14 is provided a counter 20, which contains a pinion 21 which is meshed into the rack 13 and which transmits its rotational movement by a suitable gear ratio to a number of digit wheels 22 which can be preset and also reset by a button 23.

When the slide is displaced along the profile bar 11 the counter thus will indicate the relative elevation of the slide 14, whereby the index point can either be a given elevation, which is fed into the counter as a presetting of the digit wheels 22 or one can start from a zero position. In a conventional manner the levelling instrument is levelled towards the levelling bar, the slide of which is displaced such that the index of the level indicator coincides with the line of sight of the levelling instrument. In this position the slide is locked to the profile bar and the obtained digit value is read.

If the profile bar should be too short (a suitable length may be 2 meters), it can be lengthened by an extension bar in its upper end, which extension bar is provided with an insertion end, which trough a snap-on lock or the like can be joined to the profile bar. Likewise the extension bar 24 is provided with a rack 13, so that the rack without interruption also can be displaced along the extension bar 24.

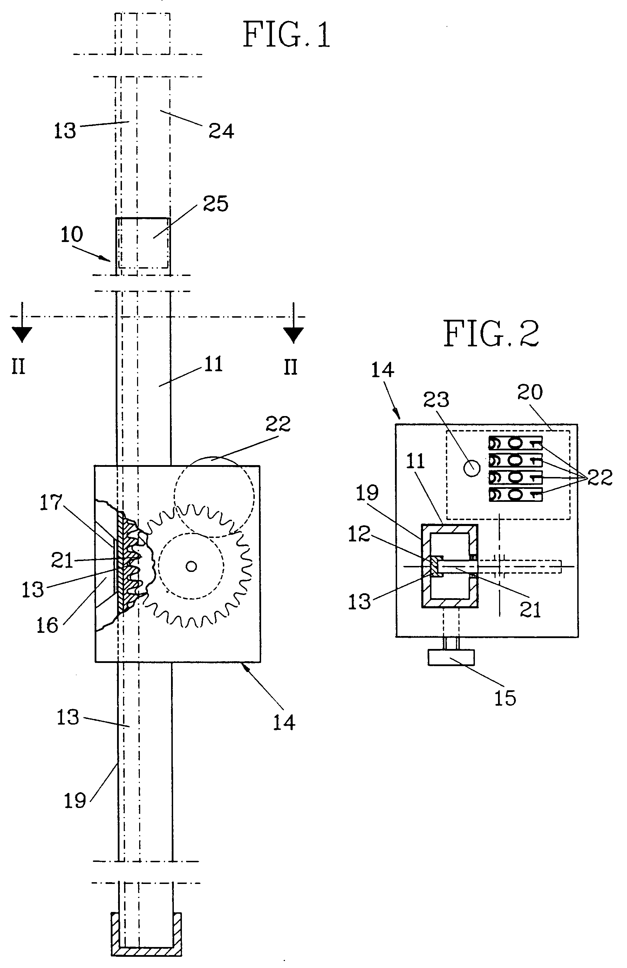

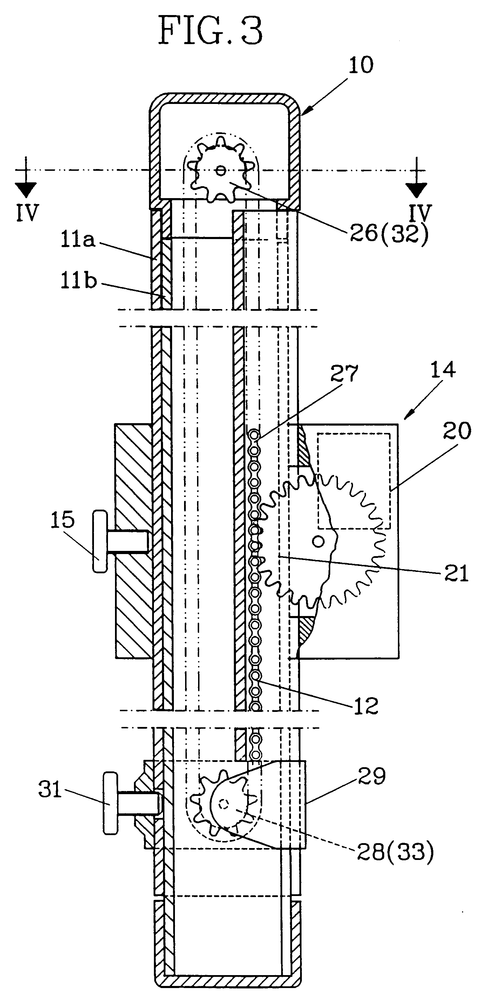

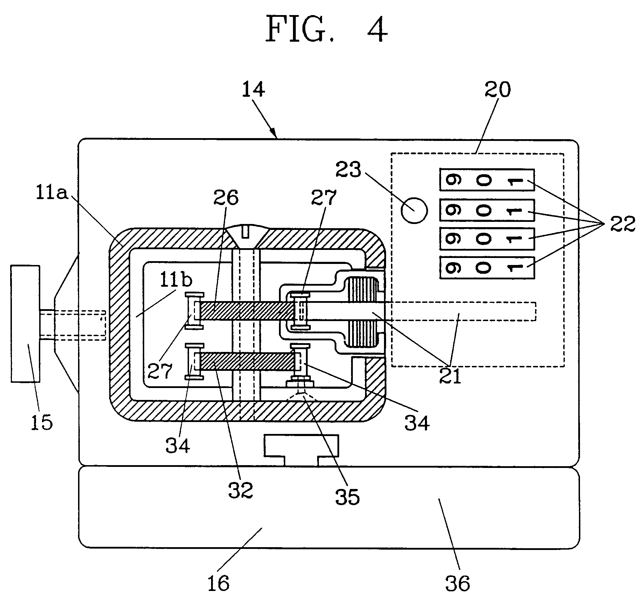

In the embodiment shown in fig. 3 and fig. 4 the levelling bar 10 consists of two telescopically into each other displaceable bar sections 11a and 11b. The outer bar section 11a in its upper end is provided with a first pulley 26 mounted in bearings in this end for an endless chain 27, which at the lower part of the outer bar section is conveyed around a second pulley 28. This is mounted in bearings in a bracket 29, which is inserted through a slot in the interior of the outer bar section 11a. The bracket is also provided with a clamping means 31, for clamping the two bar sections 11a and 11b to each other. In this embodiment the chain 27 constitutes the reference means 12, which cooperates with a pinion 21 mounted in bearings in the slide 14. Similarly to the embodiment according to figures 1 and 2 a counter 20 is provided in the slide 14.
In order to compensate the change in length at the counter when the inner bar section 11b in withdrawn from the outer bar section 11a, a third and a fourth pulley 32 and 33 are arranged on the shafts of the pulleys 26 and 28 for a second endless chain 34.

In the folded up position of the bar sections 11a and 11b, shown in fig. 3 the upper end portion of the inner bar section 11b by means of a carrier 35 is connected to the second chain 34 so that when the inner bar section is pulled out, it drags along the chain 34 and accordingly also the chain 27 which activates the gear-wheels of the counter 21.

Modern levelling instruments operate with a laser light beam as a line of sight and in such cases the level indicator 16 consists of a receiver 36, which emits an acoustic signal, when the level indicator and accordingly the slide 14 comes into position of sight with the levelling instrument.

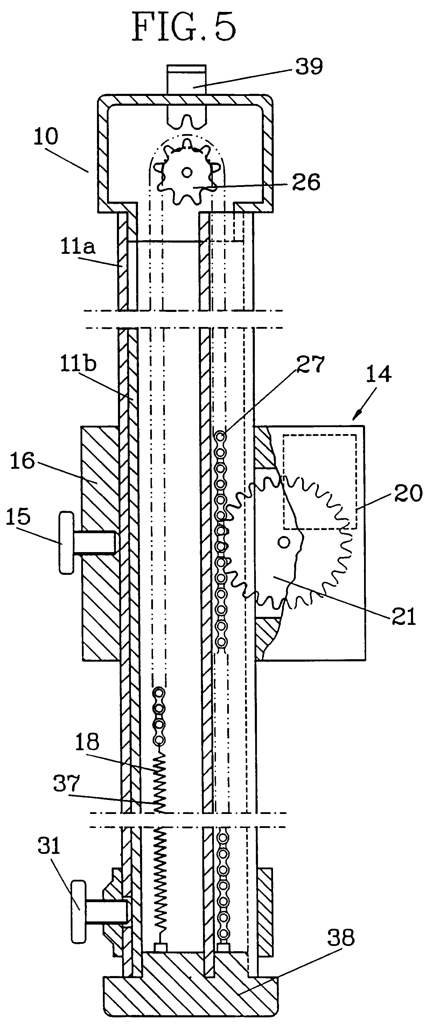

A somewhat simplified version of the embodiment shown in fig. 3 and 4 is illustrated in fig. 5. In this embodiment a pulley 26 is provided at the upper end part of the outer bar section 11a for a chain 27, the ends which are secured to lower end part of the inner bar section 11b. To the inner chain portion an expansion device 18 is connected, which in the displayed embodiment consists of a tension spring 37, which is attached by an end plug 38 inserted in the outer end of the bar section 11b.

In order to prevent that the position of the chain 27 is altered when the slide 14 is displaced because of the spring elastic mounting, in the upper end part of outer bar section 11a, a blocking means 39 is provided, which in active position blocks the pulley 26 and accordingly the chain 27, while in the withdrawn passive position the chain can run over the pulley 26, so that a relative displacement between the bar sections 11a and 11b can be carried out.

In the same way as in the previous embodiments the slide 14 is provided with a counter 20 with gear-wheel 21 which cooperates with the chain 27.

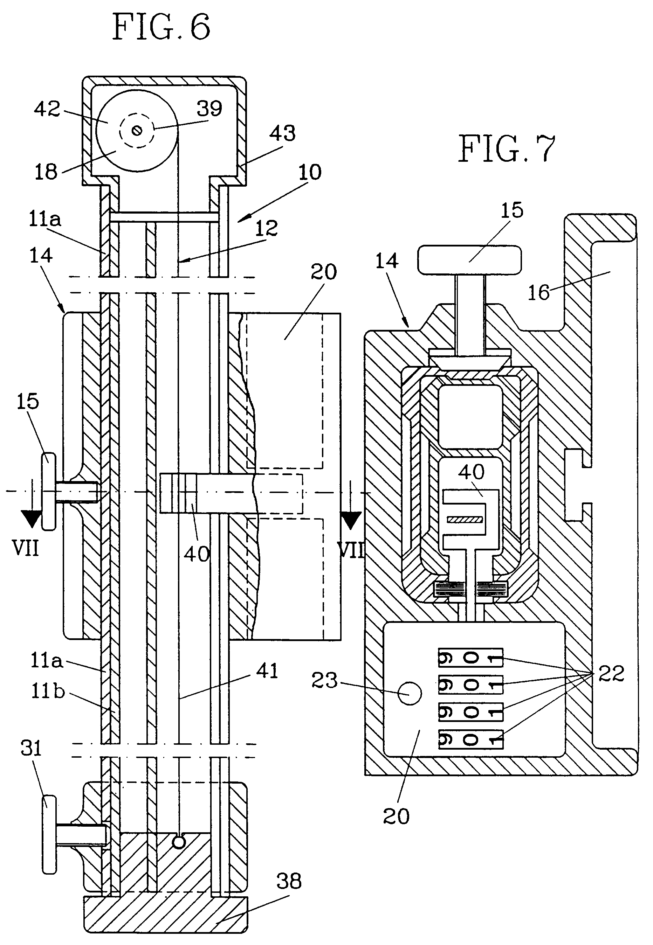

In the embodiment shown in fig. 6 and 7 the detection of the reference means 12 is carried out non- contact by means of a photo electric interrupter 40 connected to the slide 14. In this case the reference means 12 consists of a windable steel strip 41, which is preferably provided with a longitudinal perforation through which the light beam can pass. The steel strip is connected to an expansion device 18 which in the embodiment shown consists a spring loaded wind up mechanism 42 which is arranged at the upper end part of the outer bar section, respectively one to the upper end part connectable end cover 43. The wind up mechanism 42 is provided with a blocking means which can be activated by a control button not shown, which blocking means blocks up the winding mechanism in activated position. The steel strip 41 with its free end firmly joined to the lower end part of the inner bar section 11b, so that when this is withdrawn and the blocking device 39 released the both bar sections can be displaced with respect to each other.

The non-contact detection of the steel strip 41 is preferably carried out by means of a light-emitting diode as a transmitter and the output signal is fed if necessary after amplification to an electric counter, for example an electromagnetic impulse counter of known design. Instead of a steel strip also a nonmagnetic strip can be used which is provided with magnetic scale divisions, which can be non-contact detected by means of a magnetic slot switch.

## Claims

1. Levelling bar, in the form of a simple bar (11) or several into each other displaceable bar sections (11a, 11b), to determine the elevation difference between different points and which is provided with a slide (14) which is displaceable along said bar and lockable in different positions said slide being provided with a level indicator (16)
**characterized therein,**
that the slide (14) is provided with a counter apparatus (20), which in cooperation with the simple bar/bar sections (11a, 11b) or a reference means (12) attached to said simple bar/bar sections is provided to indicate the relative distance from one of the outer ends of the simple bar/bar sections to said level indicator (16).

2. Levelling bar according to claim 1
**characterized therein,**
that the counter apparatus (20) is a counter provided with a digit indicator (11), preferably with preset and zero setting facilities, said counter being arranged to be activated by a transducer (21, 40) which is engaged to or provided to detect said reference means (12).

3. Levelling bar according to claim 2
**characterized therein,**
that the bar (11) contains of at least two telescopic into each other displaceable and in different displacement positions lockable bar sections (11a,11b)
that the reference means (12), which consists of a chain (27), a flexible strip (41) or the like is provided to extend between the end portions of the both bar sections (11a, 11b), that the reference means is in cooperation with an expansion device (18) formed to allow an extension respectively a shortening of the reference means (12) at the relative displacement of the bar sections (11a, 11b) and that blocking means is provided to block respectively to release the displacement movement of the reference means (12).

4. Levelling bar according to claim 3,
**characterized therein,**
that the reference means consists of an endless chain (27), strip or the like, that in the first bar section (11a) in its both end portions pulleys (26,28) are mounted on bearings for the reference means (12) and that in the inner end of the second bar section (11b) is by way of a carrier (35) firmly connected to the chain or strip part (27) or with a second doubled chain/strip cooperating with the gear-wheel (21) of the counter.

5. Levelling bar according to claim 3,
**characterized therein,**
that the reference means (12) is placed around a pulley (26) provided at the end portion of the first bar section (11a) and that the both free ends of the reference means (12), one of said ends through an expansion device (18) eg. in the form of a tension spring (37), are mounted to the outer end portion of the other bar section (11b).

6. Levelling bar according to claim 3,
**characterized therein,**
that the reference means (12) is connected to an expansion device (18) which consists of a spring loaded winding mechanism (42) placed at the end portion of the first bar section (11a), while the opposite end of the reference means is attached to the outer end portion of the second bar section (11b).

7. Levelling bar according to claim 2,
**characterized therein,**
that the transducer (21) consists of a gear-wheel or the like, which is meshed into the reference means (12) consisting of a chain (27) or a strip (41), and that the gear-wheel (21) is arranged to transfer its rotation to a number of digit wheels (22) of a digit display.

8. Levelling bar according to claim 2,
**characterized therein,**
that the transducer (40) consists of a photo electric interrupter, a magnetic slot switch or the like and that the reference means (12) consists of a strip provided with perforations, magnetizable markings or the like.

## Patentansprüche

1. Nivellierinstrument in Gestalt einer einfachen Stange (11) oder mehrerer ineinander schiebbarer Stangenteile (11, 11b) zur Bestimmung des Niveauunterschieds zwischen unterschiedlichen Punkten, mit einem Schieber (14), der längs der Stange verstellbar sowie in unterschiedlichen Positionen festsetzbar und mit einer Niveauanzeige (16) versehen ist,
**dadurch gekennzeichnet,**
daß der Schieber (14) mit einer Zählvorrichtung (20) versehen ist, die mit der einfachen Stange/den Stangenteilen (11a, 11b) oder einer an der einfachen Stange/ den Stangenteilen befestigten Bezugseinrichtung (12) zusammenwirkend dazu vorgesehen ist, den relativen Abstand von einem der Außenenden der einfachen Stange oder der Stangenteile zu der Niveauanzeige (16) anzuzeigen.

2. Nivellierinstrument nach Anspruch 1,
**dadurch gekennzeichnet,**
daß die Zählvorrichtung (20) ein mit einer Ziffernanzeige (22), vorzugsweise mit Voreinstell- und Nullrückstelleinrichtungen versehenener Zähler ist, der so angeordnet ist, daß er durch einen Wandler (21, 40) aktiviert wird, der dazu vorgesehen ist, die Bezugseinrichtung (12) zu erfassen oder dafür mit dieser im Eingriff zu stehen.

3. Nivellierinstrument nach Anspruch 2,
**dadurch gekennzeichnet,**
daß die Stange (11) zumindest zwei teleskopische, ineinander schiebbare und in unterschiedlichen Positionen festsetzbare Stangenteile (11a, 11b) enthält, daß die aus einer Kette (27), einem flexiblen Streifen (12) oder dgl. bestehende Bezugseinrichtung (12) dazu vorgesehen ist, sich zwischen den Endbereichen der beiden Stangenteile (11a, 11b) zu erstrecken, daß die Bezugseinrichtung mit einer Expansionsvorrichtung (18) zusammenwirkt, die dazu ausgebildet ist, eine Verlängerung bzw. Verkürzung der Bezugseinrichtung (12) bei der relativen Verstellung der Stangenteile (11a, 11b) zuzulassen, und daß eine Festsetzeinrichtung zum Hemmen bzw. Freigeben der Verstellbewegung der Bezugseinrichtung (12) vorgesehen ist.

4. Nivellierinstrument nach Anspruch 3,
**dadurch gekennzeichnet,**
daß die Bezugseinrichtung aus einer Endloskette (27), einem Streifen oder dgl. besteht, daß im ersten Stangenteil (11a) in dessen beiden Endbereichen Keilriemenscheiben (26, 28) auf Lagern für die Bezugseinrichtung (12) angebracht sind, und daß das Innenende des zweiten Stangenteils (11b) mittels eines Trägers (35) mit dem Ketten- oder Streifenteil (27) oder mit einer zweiten Kette/einem zweiten Streifen fest verbunden ist, die bzw. der mit einem Zahnrad (21) des Zählers zusammenwirkt.

5. Nivellierinstrument nach Anspruch 3,
**dadurch gekennzeichnet,**
daß die Bezugseinrichtung (12) um eine Riemenscheibe (26) herum am Endbereich des ersten Stangenteils (11a) angeordnet ist, und daß die beiden freien Enden der Bezugseinrichtung (12) - eines dieser Enden durch eine Expansionsvorrichtung (18), z.B. in Gestalt einer Zugfeder (37) - an den Außenendbereich des anderen Stangenteils (11b) angebracht sind.

6. Nivellierinstrument nach Anspruch 3,
**dadurch gekennzeichnet,**
daß die Bezugseinrichtung (12) mit einer Expansionsvorrichtung (18) verbunden ist, die aus einem unter Federvorspannung stehenden Wickelmechanismus (42) besteht, der am Endbereich des ersten Stangenteils (11a) angeordnet ist, während das gegenüberliegende Ende der Bezugseinrichtung am Außenendbereich des zweiten Stangenteils (11b) befestigt ist.

7. Nivellierinstrument nach Anspruch 2,
**dadurch gekennzeichnet,**
daß der Wandler (21) aus einem Zahnrad oder dgl. besteht, das in die Bezugseinrichtung (12) kämmend eingreift, die aus einer Kette (27) oder einem Streifen (41) besteht, und daß das Zahnrad (21) so angeordnnet ist, daß es seine Drehung auf eine Anzahl von Ziffernräder (22) der Ziffernanzeige überträgt.

8. Nivellierinstrument nach Anspruch 2,
**dadurch gekennzeichnet,**
daß der Wandler (40) aus einem fotoelektrischen Unterbrecher, einem Magnetschlitzschalter oder dgl. besteht, und daß die Bezugseinrichtung (12) aus einem Streifen besteht, der mit Durchbrüchen, magnetisierbaren Markierungen oder dgl. versehen ist.

## Revendications

1. Barre de nivellement, adoptant la forme d'une barre simple (11) ou de plusieurs tronçons (11a, 11b) de barre mobiles les uns dans les autres, pour déterminer la différence de hauteur entre des points différents, et qui est munie d'une coulisse (14) mobile le long de ladite barre et verrouillable en différentes positions, ladite coulisse étant munie d'un indicateur (16) de niveau, ***caractérisée en ce que*** la coulisse (14) est munie d'un appareil à compter (20), qui en coopération avec la barre simple/les tronçons (11a, 11b) de barre ou des moyens de référence (12) attachés à ladite barre simple/les tronçons de barre, est prévu pour indiquer la distance relative de l'une des extrémités extérieures de la barre simple/les tronçons de barre au dit indicateur (16) de niveau.

2. Barre de nivellement selon la Revendication 1, ***caractérisée en ce que*** l'appareil à compter (20) est un compteur muni d'un indicateur (11) numérique, de façon préférable comportant des moyens d'affectation d'une valeur de référence et de mise à zéro, ledit compteur étant disposé pour être actionné par un transducteur (21, 40) qui est en prise, ou prévu pour détecter lesdits moyens de référence (12).

3. Barre de nivellement selon la Revendication 2, ***caractérisée en ce que*** la barre (11) contient au moins deux tronçons (11a, 11b) de barre télescopiques mobiles l'un dans l'autre et verrouillable dans des positions de déplacement différentes, ***en ce que*** les moyens de référence (12), qui se composent d'une chaîne (27), d'une bande flexible (41) ou analogue sont prévus pour s'étendre entre les parties d'extrémités des deux tronçons (11a, 11b) de barre, ***en ce que*** les moyens de référence sont en coopération avec un dispositif extensible (18) formé pour permettre une extension, respectivement un raccourcissement, des moyens de référence (12) en accord avec le déplacement relatif des tronçons (11a, 11b) de barre et ***en ce que*** des moyens de blocage sont prévus soit pour bloquer, soit pour libérer, le mouvement de déplacement des moyens de référence (12).

4. Barre de nivellement selon la Revendication 3, ***caractérisée en ce que*** les moyens de référence se composent d'une chaîne sans fin (27), d'une bande sans fin ou analogue, ***en ce que*** des poulies (26, 28) sont montées sur des paliers, pour les moyens de référence (12), dans les deux parties d'extrémités du premier tronçon (11a) de barre, et ***en ce que*** l'extrémité intérieure du deuxième tronçon (11b) de barre est, via un support (35), fermement relié à l'élément (27) chaîne ou bande ou à une deuxième chaîne/bande doublée coopérant avec la roue d'engrenage (21) du compteur.

5. Barre de nivellement selon la Revendication 3, ***caractérisée en ce que*** les moyens de référence (12) sont placés autour d'une poulie (26) située à la partie d'extrémité du premier tronçon (11a) de barre et ***en ce que*** les deux extrémités libres des moyens de référence (12) sont fixées à la partie d'extrémité extérieure de l'autre tronçon (11b) de barre, une desdites extrémités étant fixée par l'intermédiaire d'un dispositif extensible (18), par exemple adoptant la forme d'un ressort (37) de tension.

6. Barre de nivellement selon la Revendication 3, ***caractérisée en ce que*** les moyens de référence (12) sont reliés à un dispositif extensible (18) qui se compose d'un mécanisme (42) à enroulement sous l'action d'un ressort placé à la partie d'extrémité du premier tronçon (11a) de barre, tandis que l'extrémité opposée des moyens de référence est fixée à la partie d'extrémité extérieure du deuxième tronçon (11b) de barre.

7. Barre de nivellement selon la Revendication 2, ***caractérisée en ce que*** le transducteur (21) se compose d'une roue d'engrenage ou analogue, qui est en prise dans les moyens de référence (12) se composant d'une chaîne (27) ou d'une bande (41), et ***en ce que*** la roue d'engrenage (21) est disposée pour transmettre sa rotation à plusieurs roues (22) à chiffres d'un affichage numérique.

8. Barre de nivellement selon la Revendication 2, ***caractérisée en ce que*** le transducteur (40) se compose d'un interrupteur photo-électrique, d'un interrupteur magnétique à encoches ou analogue, et ***en ce que*** les moyens de référence (12) se composent d'une bande munie de perforations, de marques magnétisables ou analogue.
